(19) Europäisches Patentamt
European Patent Office
Office européen des brevets

(11) **EP 3 876 032 A1**

(12) **EUROPEAN PATENT APPLICATION**
published in accordance with Art. 153(4) EPC

(43) Date of publication:
**08.09.2021 Bulletin 2021/36**

(51) Int Cl.:
*G03B 30/00* (2021.01)     *G02F 1/13* (2006.01)
*G02F 1/1335* (2006.01)     *G03B 35/24* (2021.01)
*H04N 13/31* (2018.01)     *H04N 13/312* (2018.01)
*H04N 13/346* (2018.01)     *H04N 13/363* (2018.01)
*H04N 13/373* (2018.01)

(21) Application number: **19878536.2**

(22) Date of filing: **24.10.2019**

(86) International application number:
**PCT/JP2019/041753**

(87) International publication number:
**WO 2020/090626 (07.05.2020 Gazette 2020/19)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.10.2018   JP 2018205979**

(71) Applicant: **Kyocera Corporation
Kyoto-shi, Kyoto 612-8501 (JP)**

(72) Inventors:
• **KUSAFUKA Kaoru
  Kyoto-shi, Kyoto 612-8501 (JP)**
• **HASHIMOTO Sunao
  Kyoto-shi, Kyoto 612-8501 (JP)**

(74) Representative: **Viering, Jentschura & Partner
mbB
Patent- und Rechtsanwälte
Am Brauhaus 8
01099 Dresden (DE)**

(54) **IMAGE DISPLAY DEVICE, IMAGE DISPLAY SYSTEM, AND MOVING BODY**

(57)     An image display device includes a display panel, a barrier panel, and a controller. The controller is configured so that first display regions and second display regions can be set in the display panel. The controller is configured so that first transparent regions and second transparent regions can be set in the barrier panel. The controller is configured so that eye-position information of a user can be acquired. The controller is configured so that, based on the eye-position information, a reference position can be set. The controller is configured so that, based on a distance from the reference position, division regions can be set for at least one of the display panel and the barrier panel. The controller is configured so that at least one of the parallax image pitch representing a pitch at which the first display regions and the second display regions are alternately arranged and the barrier pitch representing a pitch at which the first transparent regions and the second transparent regions are alternately arranged can be set for each of the division regions.

*FIG. 10*

**Description**

Cross-reference to related application

This application claims priority to Japanese Patent Application No. 2018-205979 (filed on October 31, 2018), the contents of which are incorporated herein by reference in its entirety.

Technical Field

The present disclosure relates to an image display device, an image display system, and a moving body.

Background Art

In a recent year, an image display device has been known that provides a stereoscopic view by projecting a parallax image to both eyes of a user by providing an optical element which defines a direction of image light. This technique is described in, for example, Japanese Unexamined Patent Publication JP-A 2012-141331.

Summary of Invention

An image display device according to an embodiment of the disclosure includes a display panel, a barrier panel, and a controller. The display panel includes display-pixels arranged along a parallax direction which gives parallax to both eyes of a user. The barrier panel is positioned so as to overlap the display panel. The barrier panel includes barrier-pixels arranged along the parallax direction. The controller is configured so that first display regions for displaying a first image projected on the first eye of the user and second display regions for displaying a second image projected on the second eye of the user, can be set in the display panel. The controller is configured so that the first display regions and the second display regions can be set so that the first display regions and the second display regions are alternately arranged along the parallax direction. The controller is configured so that first transparent regions and second transparent regions can be set in the barrier panel, image light emitted from the display panel being transmitted through the first transparent regions at a first transmittance and the image light being transmitted through the second transparent regions at a second transmittance lower than the first transmittance. The controller is configured so that the first transparent regions and the second transparent regions can be set so that the first transparent regions and the second transparent regions are alternately arranged along the parallax direction. The controller is configured so that eye-position information representing an eye-position of at least one of the first eye and the second eye can be acquired. The controller is configured so that a reference position can be set in at least one of the display panel and the barrier panel, based on the eye-position information. The controller is configured so that division regions can be set for at least one of the display panel and the barrier panel, based on a distance from the reference position along the parallax direction. The controller is configured so that at least one of a parallax image pitch and a barrier pitch can be set for each of the division regions. The parallax image pitch represents a pitch at which the first display regions and the second display regions are alternately arranged in the display panel. The barrier pitch represents a pitch at which the first transparent regions and the second transparent regions are alternately arranged in the barrier panel.

An image display system according to another embodiment of the disclosure includes an image display device and a reflective member. The image display device includes a display panel, a barrier panel, and a controller. The display panel includes display-pixels arranged along a parallax direction which gives parallax to both eyes of a user. The barrier panel is positioned so as to overlap the display panel. The barrier panel includes barrier-pixels arranged along the parallax direction. The controller is configured so that first display regions for displaying a first image projected on the first eye of the user and second display regions for displaying a second image projected on the second eye of the user, can be set in the display panel. The controller is configured so that the first display regions and the second display regions can be set so that the first display regions and the second display regions are alternately arranged along the parallax direction. The controller is configured so that first transparent regions and second transparent regions can be set in the barrier panel, image light emitted from the display panel being transmitted through the first transparent regions at a first transmittance and the image light being transmitted through the second transparent regions at a second transmittance lower than the first transmittance. The controller is configured so that the first transparent regions and the second transparent regions can be set so that the first transparent regions and the second transparent regions are alternately arranged along the parallax direction. The controller is configured so that eye-position information representing an eye-position of at least one of the first eye and the second eye can be acquired. The controller is configured so that a reference position can be set in at least one of the display panel and the barrier panel, based on the eye-position information. The controller is configured so that division regions can be set for at least one of the display panel and the barrier panel, based on a distance from the reference position along the parallax direction. The controller is configured so that at least one of a parallax image pitch and a barrier pitch can be set for each of the division regions. The parallax image pitch represents a pitch at which the first display regions and the second display regions are alternately arranged in the display panel. The barrier pitch represents a pitch at which the first transparent regions and the second transparent regions are alternately arranged in the barrier panel. The reflective member reflects image light related to the parallax image to cause the image light to reach the first eye and the second eye of the user.

A moving body according to still another embodiment of the disclosure mounts an image display system. The image display system includes an image display device and a reflective member. The image display device includes a display panel, a barrier panel, and a controller. The display panel includes display-pixels arranged along a parallax direction which gives parallax to both eyes of a user. The barrier panel is positioned so as to overlap the display panel. The barrier panel includes barrier-pixels arranged along the parallax direction. The controller is configured so that first display regions for displaying a first image projected on the first eye of the user and second display regions for displaying a second image projected on the second eye of the user, can be set in the display panel. The controller is configured so that the first display regions and the second display regions can be set so that the first display regions and the second display regions are alternately arranged along the parallax direction. The controller is configured so that first transparent regions and second transparent regions can be set in the barrier panel, image light emitted from the display panel being transmitted through the first transparent regions at a first transmittance and the image light being s transmitted through the second transparent regions at a second transmittance lower than the first transmittance. The controller is configured so that the first transparent regions and the second transparent regions can be set so that the first transparent regions and the second transparent regions are alternately arranged along the parallax direction. The controller is configured so that eye-position information representing an eye-position of at least one of the first eye and the second eye can be acquired. The controller is configured so that a reference position can be set in at least one of the display panel and the barrier panel, based on the eye-position information. The controller is configured so that division regions can be set for at least one of the display panel and the barrier panel, based on a distance from the reference position along the parallax direction. The controller is configured so that at least one of a parallax image pitch and a barrier pitch can be set for each of the division regions. The parallax image pitch represents a pitch at which the first display regions and the second display regions are alternately arranged in the display panel. The barrier pitch represents a pitch at which the first transparent regions and the second transparent regions are alternately arranged in the barrier panel. The reflective member reflects image light related to the parallax image to cause the image light to reach the first eye and the second eye of the user.

Brief Description of Drawings

FIG. 1 is a diagram illustrating a configuration example of an image display device according to an embodiment;

FIG. 2 is a block diagram illustrating the configuration example of the image display device according to the embodiment;

FIG. 3 is a plan view illustrating a configuration example of a display panel;

FIG. 4 is a plan view illustrating a configuration example of a barrier panel;

FIG. 5 is a cross-sectional view illustrating an example of arrangement of the display panel and the barrier panel;

FIG. 6 is a cross-sectional view illustrating an apparent depth of a display element in the display panel;

FIG. 7 is a graph illustrating a relationship between a distance from a reference position and the apparent depth of the display element;

FIG. 8 is a cross-sectional view illustrating an apparent gap at each position with respect to a reference position in the case where the barrier panel is located closer to a user than the display panel;

FIG. 9 is a graph illustrating a relationship between an x-coordinate of each position with respect to a reference position and an optimum common pitch;

FIG. 10 is a cross-sectional view illustrating an example of setting division regions;

FIG. 11 is a cross-sectional view illustrating an apparent gap at each position with respect to a reference position in the case where the display panel is located closer to a user than the barrier panel;

FIG. 12 is a plan view illustrating an example of arrangement of barrier-pixels in a first division region;

FIG. 13 is a plan view illustrating an example of arrangement of barrier-pixels in a second division region in the barrier panel of FIG. 8;

FIG. 14 is a plan view illustrating an example of arrangement of the barrier-pixels in the second division region in the barrier panel of FIG. 11;

FIG. 15 is a plan view illustrating an example of arrangement of display-pixels in the first division region;

FIG. 16 is a plan view illustrating an example of arrangement of display-pixels in the second division region in the display panel of FIG. 8;

FIG. 17 is a plan view illustrating an example of arrangement of display-pixels in the second division region in the display panel of FIG. 11; and

FIG. 18 is a diagram illustrating a configuration example of an image display system according to an embodiment.

Description of Embodiments

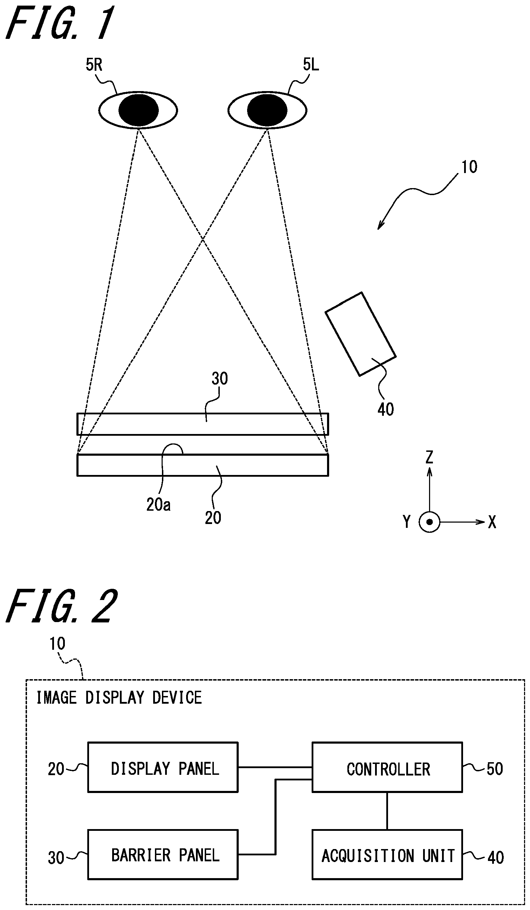

As illustrated in FIGS. 1 and 2, an image display device 10 according to an embodiment includes a display panel 20, a barrier panel 30, and a controller 50. The image display device 10 may further include an acquisition unit 40.

The display panel 20 is configured to be able to display an image to be viewed by a user. The barrier panel 30 is configured to allow part of image light emitted from the display panel 20 to reach one of a left eye 5L and a right eye 5R of the user and to allow the other part of the image light to reach the other eye of the user. That is, the barrier panel 30 is configured to divide traveling directions of at least part of the image light into the left eye 5L and the right eye 5R of the user. Compared to the display panel 20, the barrier panel 30 may be located closer to or farther from the user when viewed from the user. The image light traveling in a direction limited by the barrier panel 30 can reach the left eye 5L and the right eye 5R of the user as different image light. As a result, the user can view different images for each of the left eye 5L and the right eye 5R. That is, the image display device 10 can be configured to project a parallax image onto both eyes of the user. The parallax image is an image projected on each of the left eye 5L and the right eye 5R of the user and is an image which gives parallax to both eyes of the user. The user can see the image stereoscopically by viewing the parallax image by the left eye 5L and the right eye 5R. A direction which gives parallax to both eyes of the user is also called a parallax direction. The parallax direction corresponds to a direction in which the left eye 5L and the right eye 5R of the user are lined up. The left eye 5L and the right eye 5R of the user are also referred to as a first eye and a second eye of the user, respectively.

The controller 50 is connected to each component of the image display device 10 and is configured to be able to control each component. The controller 50 may be configured as, for example, a processor. The controller 50 may include one or more processors. The processor may include a general-purpose processor which loads a specific program and executes a specific function and a dedicated processor specialized for a specific process. The dedicated processors may include an application specific IC (Application Specific Integrated Circuit: ASIC). The processor may include a Programmable Logic Device (PLD). The PLD may include an FPGA (Field-Programmable Gate Array). The controller 50 may be either a System-on-a-Chip (SoC) or a System In a Package (SiP) in which one or a plurality of processors cooperate. The controller 50 may include a storage unit, and the storage unit may store various kinds of information, a program for operating each component of the image display device 10, and the like. The storage unit may be composed of, for example, a semiconductor memory or the like. The storage unit may be configured to function as a work memory of the controller 50.

The acquisition unit 40 is configured to be able to acquire information regarding an eye-position of at least one of the left eye 5L and the right eye 5R of the user and is configured to be able to output the information to the controller 50. The acquisition unit 40 may be configured to be able to acquire information regarding the eye-positions of the left eye 5L and the right eye 5R of the user. The information regarding the eye-position of at least one of the left eye 5L and the right eye 5R of the user is also referred to as eye-position information. The acquisition unit 40 may be configured to be connectable to a camera. In the case where the acquisition unit 40 is connected to a camera, the acquisition unit 40 may be configured to be able to acquire a captured image from the camera and acquire the eye-position information based on the captured image.

The camera may be configured to be capable of detecting the eye-position of at least one of the left eye 5L and the right eye 5R of the user. The eye-position of at least one of the left eye 5L and the right eye 5R of the user is also referred to as an eye-position. The camera may be configured to be able to output the eye-position information based on an eye-position detection result. The camera may be configured to be capable of capturing an image of a user's face and to be able to detect the eye-position based on the captured image. The camera may be configured to be able to detect the eye-position as coordinates in three-dimensional space based on the captured image. The camera may include a plurality of imaging elements. The camera may be configured so that the eye-position can be detected as the coordinates in the three-dimensional space based on the captured image of each imaging element.

The acquisition unit 40 may include a camera. The acquisition unit 40 may be configured to be connectable to a camera provided as a configuration separate from the image display device 10. The acquisition unit 40 may include an input terminal configured to be capable of inputting a signal from the camera. The camera may be configured to be directly connectable to the input terminal. The camera may be configured to be indirectly connectable to the input terminal via a shared network. The acquisition unit 40 without a camera may include an input terminal configured so that a video signal can be inputted from the camera. The acquisition unit 40 may be configured to be able to detect the eye-position based on the video signal inputted to the input terminal.

The acquisition unit 40 may include, for example, a sensor. The sensor may be an ultrasonic sensor, an optical sensor, or the like. The acquisition unit 40 may be configured so that the position of a user's head can be detected by a sensor and the eye-position can be detected based on the position of the head. The acquisition unit 40 may be configured so that the eye-position can be detected as coordinates in three-dimensional space by one or two or more sensors.

The acquisition unit 40 is configured to be able to calculate a distance between the left eye 5L and the right eye 5R and the barrier panel 30 as an observation distance (P) based on the detection result of the eye-position.

The acquisition unit 40 may be configured so that a difference between a Z coordinate of the eye-position and a Z coordinate of the barrier panel 30 can be calculated as the observation distance (P). The acquisition unit 40 may be configured to be able to calculate an inter-eye distance (E) based on the detection result of the eye-position.

The image display device 10 does not have to include the acquisition unit 40. When the image display device 10 does not include the acquisition unit 40, the controller 50 may include an input terminal provided outside the device so as to be able to input a signal from a device for detecting the eye-position of the eye of the user. A device provided outside the device which can detect the eye-position of the eye of the user is also referred to as a detection device outside the device. The detection device outside the device may be configured to be connectable to the input terminal. The detection device outside the device may be configured to enable the use of an electrical signal and an optical signal as a transmission signal to the input terminal. The detection device outside the device may be configured to be indirectly connectable to the input terminal via a shared network.

The display panel 20 is configured to be able to display a left-eye image which is viewed by the left eye 5L of the user and a right-eye image which is viewed by the right eye 5R of the user. The display panel 20 may include a liquid crystal device such as an LCD (Liquid Crystal Display). The display panel 20 may include a self-luminous device such as an organic EL (ElectroLuminescence) or an inorganic EL. In the case where the display panel 20 includes the self-luminous device, the barrier panel 30 is located closer to the user than the display panel 20.

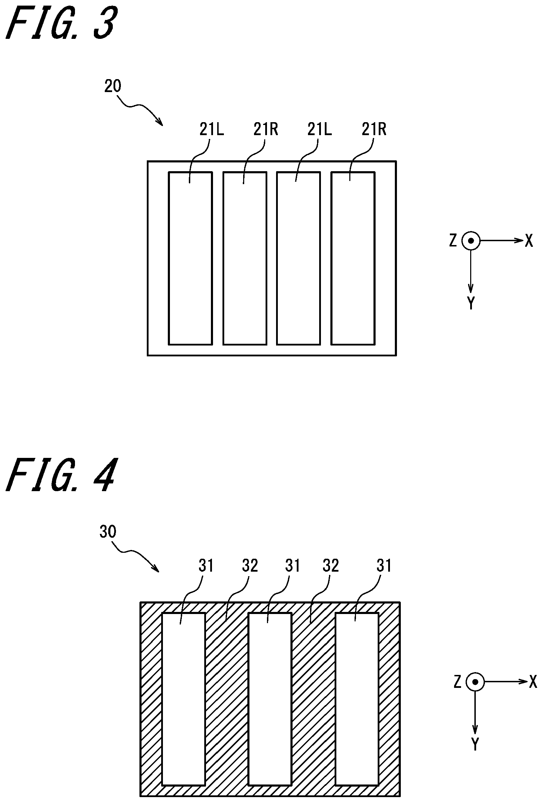

As illustrated in FIG. 3, the display panel 20 is configured to be able to form a plurality of left-eye image display regions 21L and a plurality of right-eye image display regions 21R. In other words, the controller 50 is configured so that the plurality of left-eye image display regions 21L and the plurality of right-eye image display regions 21R, can be set in the display panel 20. The display panel 20 is configured to be able to display a left-eye image in each left-eye image display region 21L. The display panel 20 is configured to be able to display a right-eye image in each right-eye image display region 21R. That is, the display panel 20 is configured to be able to display a parallax image in the plurality of left-eye image display regions 21L and the plurality of right-eye image display regions 21R. In the case where the left eye 5L and the right eye 5R are referred to as the first eye and the second eye, respectively, the plurality of left-eye images and the plurality of right-eye images are also referred to as the plurality of first images and the plurality of second images, respectively. The plurality of left-eye image display regions 21L and the plurality of right-eye image display regions 21R are also referred to as a plurality of first display regions and a plurality of second display regions, respectively. The region of the display panel 20 displaying the parallax image is also called an active area. The plurality of left-eye image display regions 21L and the plurality of right-eye image display regions 21R are aligned in the X-axis direction. In this embodiment, the parallax direction is along the X-axis direction. The X-axis direction is also referred to as a horizontal direction or a first direction. The Y-axis direction is also referred to as a vertical direction or a second direction. The plurality of left-eye image display regions 21L and the plurality of right-eye image display regions 21R may be located at intervals as illustrated in FIG. 3, or may be arranged adjacent to each other.

As illustrated in FIG. 3, the plurality of left-eye image display regions 21L and the plurality of right-eye image display regions 21R may extend along the Y-axis direction, or may extend in a direction inclined at a predetermined angle with respect to the Y-axis direction. In other words, the plurality of left-eye image display regions 21L and the plurality of right-eye image display regions 21R may extend along the direction intersecting the parallax direction. The plurality of left-eye image display regions 21L and the plurality of right-eye image display regions 21R may be alternately arranged along a predetermined direction including a component in the parallax direction. A pitch at which the plurality of left-eye image display regions 21L and the plurality of right-eye image display regions 21R are alternately arranged is also called a parallax image pitch.

As illustrated in FIG. 4, the barrier panel 30 is configured to be capable of forming a plurality of light-transmitting regions 31 and a plurality of dimming regions 32. The plurality of light-transmitting regions 31 are configured to transmit light incident on the barrier panel 30 from the display panel 20. The plurality of light-transmitting regions 31 may be configured to transmit light with a transmittance equal to or higher than a first transmittance. The first transmittance may be, for example, 100%, or may be a value close to 100%. The plurality of dimming regions 32 are configured to reduce the light incident on the barrier panel 30 from the display panel 20. The plurality of dimming regions 32 may be configured to transmit light with a transmittance equal to or lower than a second transmittance. The second transmittance may be, for example, 0% or a value close to 0%. The plurality of light-transmitting regions 31 and the plurality of dimming regions 32 are also referred to as a plurality of first transparent regions and a plurality of second transparent regions, respectively. The first transmittance is larger than the second transmittance. The first transmittance may be a value smaller than 50%, for example, 10% or the like, as long as a sufficient contrast with the light transmitted through a plurality of dimming portions 31S can be secured. The second transmittance may be a value larger than around 0%, for example, 10% or the like, as long as a sufficient contrast with the light transmitted through a plurality of light-transmitting portions 31T can be secured. A sufficient contrast ratio may be, for example, 100 : 1.

The plurality of light-transmitting regions 31 are configured so that the image light related to the left-eye image reaches the left eye 5L of the user, and also the plurality of light-transmitting regions 31 are configured so that the image light related to the right-eye image reaches the right eye 5R of the user. The plurality of dimming regions 32 are configured so as to prevent or make it difficult for the image light related to the left-eye image to reach the right eye 5R of the user, and also the plurality of dimming regions 32 are configured to prevent or make it difficult for the image light related to the right-eye image to reach the left eye 5L of the user. The barrier panel 30 may be configured so that the user can view the right-eye image by the right eye 5R, while the right-eye image is not viewed or is difficult to be viewed by the left eye 5L. The barrier panel 30 may be configured so that the user can view the left-eye image by the left eye 5L, while the left-eye image is not viewed or is difficult to be viewed by the right eye 5R. The barrier panel 30 is configured to define the direction of image light for a parallax image including a left-eye image and a right-eye image by being configured to form a plurality of light-transmitting regions 31 and a plurality of dimming regions 32. The direction of the image light related to the parallax image is also referred to as a light direction of the parallax image.

The plurality of light-transmitting regions 31 and the plurality of dimming regions 32 are arranged alternately in the X-axis direction. A boundary between each light-transmitting region 31 and each dimming region 32 may be along the Y-axis direction as illustrated in FIG. 4, or may be along a direction inclined at a predetermined angle with respect to the Y-axis direction. The boundary between each light-transmitting region 31 and each dimming region 32 may be along a direction intersecting the parallax direction. In other words, the plurality of light-transmitting regions 31 and the plurality of dimming regions 32 may be alternately arranged along a predetermined direction including a component in the parallax direction.

The shapes of the plurality of light-transmitting regions 31 and the plurality of dimming regions 32 may be determined based on the shapes of the plurality of left-eye image display regions 21L and the plurality of right-eye image display regions 21R. Conversely, the shapes of the plurality of left-eye image display regions 21L and the plurality of right-eye image display regions 21R may be determined based on the shapes of the plurality of light-transmitting regions 31 and the plurality of dimming regions 32.

It is assumed that the barrier panel 30 is constituted by a liquid crystal shutter. The liquid crystal shutter may be configured to control the light transmittance based on an applied voltage. The liquid crystal shutter may be configured to be constituted by a plurality of pixels, and the light transmittance in each pixel may be controllable. The liquid crystal shutter may be configured so that a region having a high light transmittance or a region having a low light transmittance can be formed in an arbitrary shape. In the case where the barrier panel 30 is constituted by a liquid crystal shutter, the plurality of light-transmitting regions 31 may have a transmittance equal to or higher than the first transmittance. In the case where the barrier panel 30 is constituted by a liquid crystal shutter, the plurality of dimming regions 32 may have a transmittance of equal to or less than the second transmittance.

The display panel 20 and the barrier panel 30 each include a plurality of pixels. The plurality of pixels of the display panel 20 are also referred to as a plurality of display-pixels. The plurality of pixels of the barrier panel 30 is also referred to as a plurality of barrier-pixels. It is assumed that the plurality of display-pixels and the plurality of barrier-pixels are arranged along the parallax direction. An arrangement pitch of the plurality of display-pixels in the parallax direction and an arrangement pitch of the plurality of barrier-pixels in the parallax direction may be the same or different. In the embodiment, it is assumed that the arrangement pitch of the plurality of display-pixels in the parallax direction and the arrangement pitch of the plurality of barrier-pixels in the parallax direction are the same. In this case, each display-pixel and each barrier-pixel are associated with each other. Each barrier-pixel may be controllably configured to function as any of the plurality of light-transmitting regions 31 and the plurality of dimming regions 32. The controller 50 may be configured to be able to synchronize the control of each display-pixel with the control of each barrier-pixel associated with the control. Image quality can be improved by configuring control of display-pixels and barrier-pixels associated with each other in a synchronous manner.

In the case where the display panel 20 and the barrier panel 30 include the same pixel arrangement pitch, the display panel 20 and the barrier panel 30 have a common pixel configuration. The display panel 20 may include a color filter for expressing each color of RGB (Red Green Blue) in the display image. The barrier panel 30 does not have to include a color filter. Since the barrier panel 30 does not include a color filter, the light transmittance of the barrier panel 30 can be increased. When the display panel 20 and the barrier panel 30 have a pixel configuration common to each other, members other than the color filter can be commonly used in the display panel 20 and the barrier panel 30. By making the display panel 20 and the barrier panel 30 have a common pixel configuration, the cost of the member can be reduced.

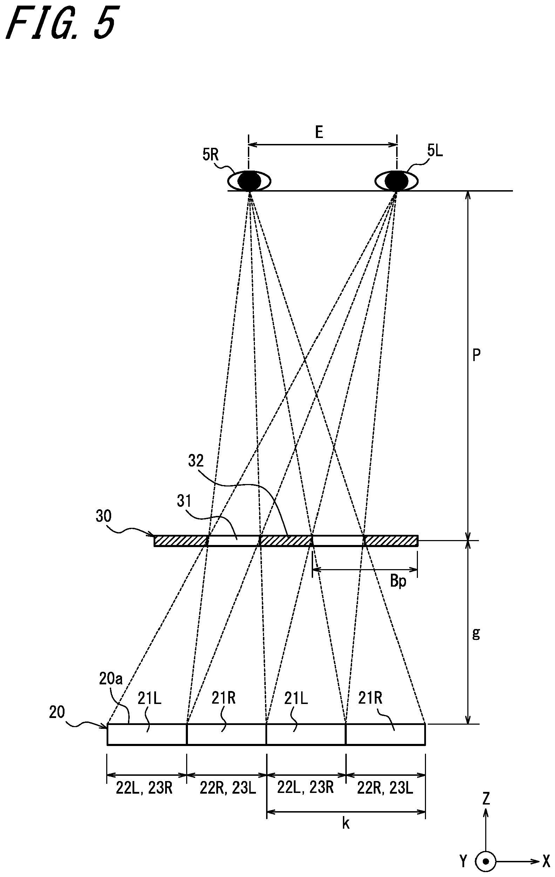

The barrier panel 30 may be located closer to or farther from the user than the display panel 20 when viewed from the user located on a positive side of the Z axis. It is assumed that the barrier panel 30 is located closer to the user than the display panel 20 when viewed from the user, as illustrated in FIG. 5. That is, it is assumed that the barrier panel 30 is located between the left eye 5L and the right eye 5R of the user and the display panel 20. The barrier panel 30 is located along the display panel 20. It can be said that the barrier panel 30 is located so as to overlap the display panel 20.

It is assumed that the left eye 5L and the right eye 5R of the user are located apart from the barrier panel 30 by a distance represented by P. The distance between the left eye 5L and the right eye 5R of the user and the barrier panel 30 is also referred to as the observation distance. A distance between the left eye 5L and the right eye 5R along the parallax direction is also called an inter-eye distance and is represented by E. A distance from the barrier panel 30 to the display panel 20 is also called a gap and is represented by g. A pitch at which the plurality of light-transmitting regions 31 and the plurality of dimming regions 32 are alternately arranged in the X-axis direction is also called a barrier pitch and is represented by Bp. The controller 50 is configured to be able to control the barrier pitch by being configured to be able to control the plurality of light-transmitting regions 31 and the plurality of dimming regions 32 of the barrier panel 30. A pitch at which the plurality of left-eye image display regions 21L and the plurality of right-eye image display regions 21R are alternately arranged in the X-axis direction is also called a parallax image pitch and is represented by k. The controller 50 is configured to be able to control the parallax image pitch by being configured to be able to control the plurality of left-eye image display regions 21L and the plurality of right-eye image display regions 21R of the display panel 20.

The display panel 20 is configured so that a plurality of left eye visible regions 22L and a plurality of left eye non-visible regions 23L can be formed. The plurality of left eye visible regions 22L are configured to be viewable by the left eye 5L of the user through the plurality of light-transmitting regions 31. The plurality of left eye non-visible regions 23L are configured to be not viewable or difficult to be viewed by the left eye 5L of the user by the plurality of dimming regions 32. The plurality of left eye visible regions 22L and the plurality of left eye non-visible regions 23L are alternately arranged in the X-axis direction. A position of a boundary between each left eye visible region 22L and each left eye non-visible region 23L is determined by the position of the boundary between each light-transmitting region 31 and each dimming region 32, the distance from the barrier panel 30 to both eyes of the user, and the gap.

The display panel 20 is configured so that a plurality of right eye visible regions 22R and a plurality of right eye non-visible regions 23R can be formed. The plurality of right eye visible regions 22R are configured to be viewable by the right eye 5R of the user through the plurality of light-transmitting regions 31. The plurality of right eye non-visible regions 23R are configured so as to be not viewable or difficult to be viewed by the right eye 5R of the user by the plurality of dimming regions 32. The plurality of right eye visible regions 22R and the plurality of right eye non-visible regions 23R are alternately arranged in the X-axis direction. A position of a boundary between each right eye visible region 22R and each right eye non-visible region 23R is determined by the position of the boundary between each light-transmitting region 31 and each dimming region 32, the distance from the barrier panel 30 to both eyes of the user, and the gap.

The display panel 20 may be configured to be capable of displaying a parallax image so that the plurality of left-eye image display regions 21L coincide with the plurality of left eye visible regions 22L. The display panel 20 may be configured to be capable of displaying a parallax image so that the plurality of right-eye image display regions 21R coincide with the plurality of right eye visible regions 22R. That is, the display panel 20 may be configured to be capable of displaying a parallax image based on the position of the boundary between each light-transmitting region 31 and each dimming region 32, the distance from the barrier panel 30 to both eyes of the user, and the gap.

In the case where the plurality of left eye visible regions 22L and the plurality of right eye visible regions 22R overlap at least in part along the X-axis direction, crosstalk can occur, with some of the plurality of left-eye images projected onto the right eye 5R and some of the plurality of right-eye images projected onto the left eye 5L. Crosstalk deteriorates the image quality of the parallax image projected on the user.

In the case where the plurality of left eye visible regions 22L and the plurality of right eye visible regions 22R are alternately arranged in the X-axis direction without overlapping each other, the left eye 5L can view only the plurality of left-eye images, and the right eye 5R can view only the plurality of right-eye images. In this case, crosstalk can be reduced. A state in which the left eye 5L can view only the plurality of left-eye images and the right eye 5R can view only the plurality of right-eye images, can be realized in the case where the observation distance is the optimum viewing distance (OVD) .

In the case where the observation distance becomes the OVD, the following expressions (1) and (2) are established based on a geometrical relationship illustrated in FIG. 5. In other words, when expressions (1) and (2) are satisfied, a condition that the observation distance becomes the OVD is satisfied.

$$B_p = \frac{2Eg}{P+g} \qquad (1)$$

$$k = \frac{2Eg}{P} \qquad (2)$$

According to the expressions (1) and (2), the barrier pitch (Bp) and the parallax image pitch (K) are uniquely determined based on the inter-eye distance (E), the gap (g), and the observation distance (P). In other words, by configuring the controller 50 to be able to control the display panel 20 and the barrier panel 30 based on the values of the barrier pitch and the parallax image pitch determined by the expressions (1) and (2), the condition that the observation distance becomes the OVD is satisfied. The barrier pitch and the parallax image pitch which satisfy the condition that the observation distance becomes the OVD are also referred to as the optimum barrier pitch and the optimum parallax image pitch, respectively. The controller 50 is configured so that the eye-position information of the user can be acquired from the acquisition unit 40, the detection device outside the device, or the like, and the controller 50 may be configured to be able to calculate the optimum barrier pitch and the optimum parallax image pitch based on the eye-position information.

In the case where the controller 50 is configured to be able to control both the barrier pitch and the parallax image pitch, the condition that any observation distance becomes the OVD can be satisfied. In the case where the controller 50 is configured so that either the barrier pitch or the parallax image pitch can be changed only within a predetermined range, the observation distance which can satisfy the condition of OVD is limited to a narrow range based on the expressions (1) and (2).

In other words, the controller 50 is configured to be able to control both the barrier pitch and the parallax image pitch, thereby expanding the range of the observation distances that can satisfy the condition of OVD.

The controller 50 is configured to be able to control the display panel 20 and the barrier panel 30 so as to satisfy the condition that the observation distance becomes the OVD. The controller 50 may be configured to be able to control the shape and position of the plurality of left-eye image display regions 21L and the plurality of right-eye image display regions 21R on the display panel 20 so that the condition that the observation distance becomes the OVD is satisfied and the controller 50 may be configured to be able to control the parallax image pitch. The controller 50 may be configured so that the shape and position of the plurality of light-transmitting regions 31 and the plurality of dimming regions 32 can be controlled in the barrier panel 30 so as to satisfy the condition that the observation distance becomes the OVD and the controller 50 may be configured to be able to control the barrier pitch.

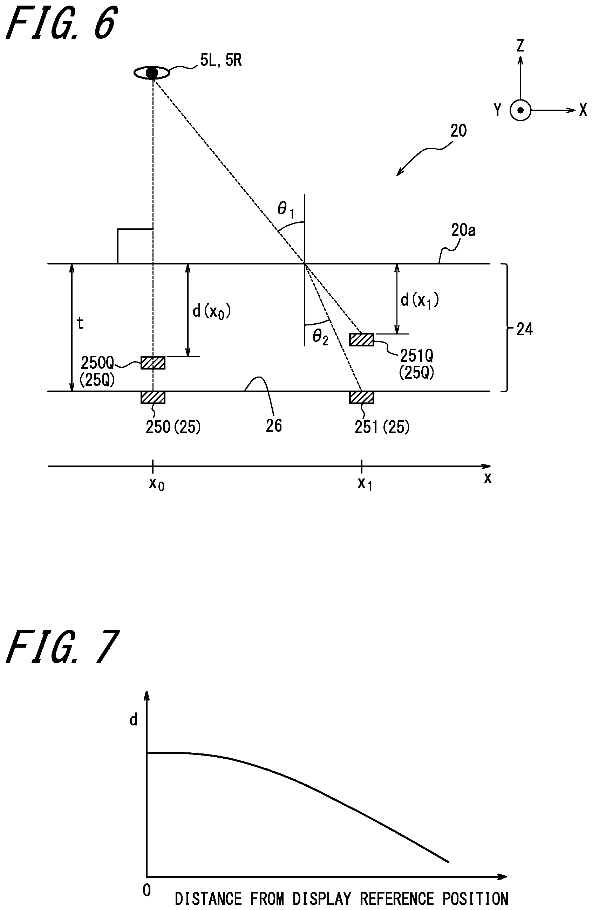

As illustrated in FIG. 6, the display panel 20 includes a cover 24, display elements 25, and a display surface 26. The display elements 25 are arranged along the display surface 26. The cover 24 covers the display surface 26 and may include glass, resin, or the like. The surface of the cover 24 forms a display surface 20a of the display panel 20. The display element 25 may be a self-luminous display element such as an EL, or may be a liquid crystal display element. In the case where the display element 25 is a self-luminous display element, the display element 25 emits image light by itself. In the case where the display element 25 is a liquid crystal display element, the display element 25 further includes a light source such as a backlight and emits image light by controlling the transmittance of the light emitted from the light source. The image light emitted from the display element 25 passes through the cover 24 and is emitted from the display panel 20. A path along which the image light travels is indicated by a broken line. The path through which image light travels is also called an optical path. An optical path length of the image light is determined based on the distance that the image light actually passes through and the refractive index of the substance through which the image light passes. Even when the image light is emitted perpendicular to a surface of the cover 24, since the refractive index of the cover 24 is larger than the refractive index of air, the position of the display element 25 looks shallower than an actual position when viewed from the user in the air. That is, a virtual image 25Q of the display element 25 appears to be closer to the user than the actual display element 25. The refractive index of air is assumed to be 1. It is assumed that the refractive index of the cover 24 is a value larger than the refractive index of air and is represented by n. In this case, n > 1 is established.

Among the image light traveling toward the left eye 5L and the right eye 5R of the user, the image light traveling in a direction having an inclination with respect to the normal of the surface of the cover 24 is refracted at the surface of the cover 24. Based on Snell's law, the larger the emission angle of the image light emitted from the display element 25, the shallower the virtual image 25Q of the display element 25 looks.

The thickness of the cover 24 is represented by t. That is, the actual distance from the surface of the cover 24 to the display element 25 is represented by t. An emission angle of the image light emitted from the display element 25 from the surface of the cover 24 is represented by $\theta_1$. In the case where the emission angle is $\theta_1$, an angle of incidence on the surface of the cover 24 is represented by $\theta_2$. The unit of $\theta_1$ and $\theta_2$ is radian. Based on Snell's law, the following expression (3) is established between $\theta_1$ and $\theta_2$.

$$\sin \theta_1 = n \times \sin \theta_2 \qquad (3)$$

Based on n > 1, it can be said that $\theta_1$ is larger than $\theta_2$.

A position facing the user when the display panel 20 is viewed by the user is also called a display reference position. It is assumed that the display reference position is set in the display surface 26 of the display panel 20.

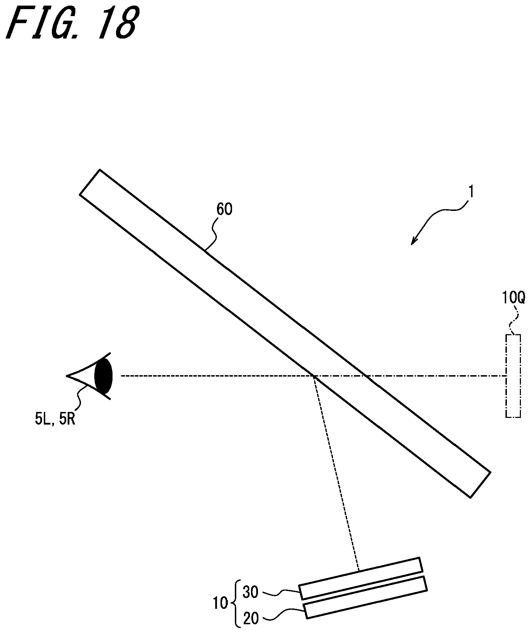

The display reference position may be set to a position where $\theta_1 = \theta_2 = 0$ is satisfied in display panel 20 and the path of the image light reaching one of the left eye 5L and the right eye 5R of the user intersects the display surface 26. The display reference position may be set to a position where $\theta_1 = \theta_2 = 0$ is satisfied in display panel 20 and the path of the image light reaching a predetermined point located between the left eye 5L and the right eye 5R intersects the display surface 26. In the case where the user looks directly at the image display device 10, the display reference position may be set to a position of a foot of a perpendicular line drawn from a point where one of the left eye 5L and the right eye 5R of the user is located with respect to the display surface 26. The display reference position may be set at a position of the foot of the perpendicular line drawn from a predetermined point located between the left eye 5L and the right eye 5R with respect to the display surface 26. In the case where the user views the image display device 10 through an optical system including a reflective member 60 (see FIG. 18) and the like, a position where the path of the image light reaching the eye of the user through the optical system intersects the display surface 26 may be set as the display reference position.

It is assumed that, on the display surface 26, the x-coordinate including the display reference position is defined along the X-axis. As illustrated in FIG. 6, the display reference position is located at a point represented by $x_0$ on the X-axis. The display reference position may be the origin of the x coordinate. A display element 250 is located at the display reference position. A virtual image 250Q corresponds to the display element 250. A display element 251 is located on the X-axis at a point represented by $x_1$. A virtual image 251Q corresponds to the display element 251. The display elements 250 and 251 are included in the display elements 25. The virtual images 250Q and 251Q are included in the virtual image 25Q. In the case where the x coordinates are defined along the X axis, the angle of incidence ($\theta_1$) of the image light emitted from the display element 25 toward the eye of the user on the display surface 20a and the angle of emission ($\theta_2$) from the display surface 20a are expressed as a function of the X coordinate of display element 25.

It is assumed that the virtual image 25Q of the display element 25 appears to be located at the depth represented by d (x). That is, the apparent depth of the display element 25 is represented by d(x). The apparent depth of the display element 25 is expressed by the following expression (4).

$$d(x) = \frac{t}{n} \times \frac{\cos\theta_1}{\cos\theta_2} \qquad (4)$$

The virtual image 250Q of the display element 250, located at the point represented by $x_0$, appears to be located at the depth represented by $d(x_0)$. The virtual image 251Q of the display element 251 located at the point represented by $x_1$ appears to be located at the depth represented by $d(x_1)$. Here, $d(x_0)$ is expressed by the following expression (5).

$$d(x_0) = \frac{t}{n} \qquad (5)$$

In the case where the emission angle of the image light emitted from the display element 25 is 0, the virtual image 250Q of the display element 250 appears to be located at the depth represented by t/n. That is, the apparent depth of the display element 250 is expressed in t/n.

Based on the expression (2), the value of d(x) becomes the maximum value in the case where $\theta_1 = \theta_2 = 0$. On the other hand, as $\theta_1$ increases in a range of $0 < \theta_1 < \pi/2$, the value of d(x) decreases and approaches 0. In the case where the user looks at the display panel 20, the emission angle of the image light emitted from the display element 250 at the display reference position becomes 0. The apparent depth of the display element 250 at the display reference position is greater than the apparent depth of the display element 251 located away from the display reference position in the X-axis direction. That is, $d(x_0)$ becomes the maximum value of d(x).

The more distant the position of the display element 25 is from the display reference position along the X axis, $\theta_1$ becomes larger in the range of $0 < \theta_1 < \pi/2$. As a result, the farther the x-coordinate of the display element 25 is from the display reference position, the closer its virtual image 25Q appears to be to the display surface 20a. That is, the farther the display element 25 is located at the x-coordinate from the display reference position, the shallower the apparent depth (d) of the display element 25. The relationship between the distance from the display reference position and the apparent depth (d) is illustrated in a graph of FIG. 7.

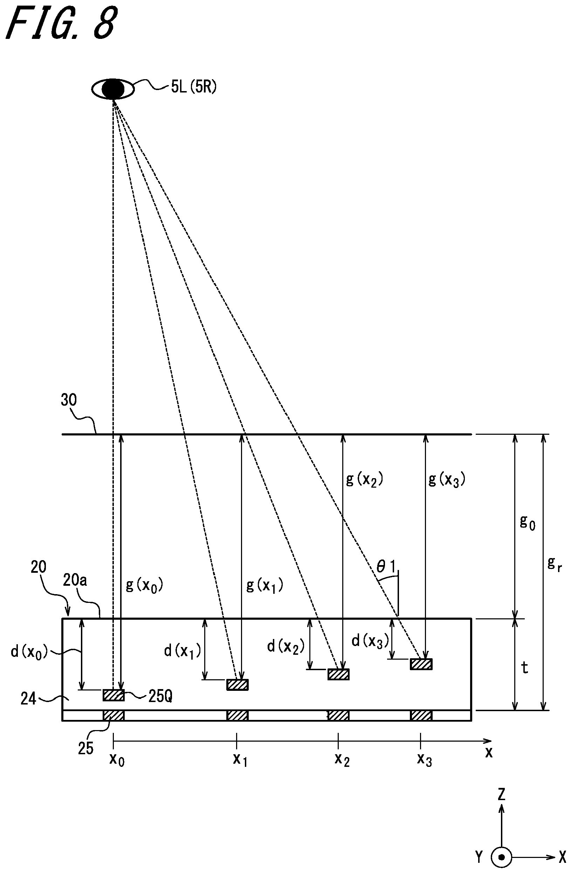

The gap (g) illustrated in FIG. 5 represents the distance between the barrier panel 30 and the display surface 26 of the display panel 20. Due to the shallower apparent depth of the display element 25, the apparent gap is shorter than the actual distance between the barrier panel 30 and display surface 26 of display panel 20. As illustrated in FIG. 8, the apparent gap is expressed as g(x). The actual distance between the barrier panel 30 and the display surface 26 of the display panel 20 is expressed as $g_r$. The distance from the barrier panel 30 to the display surface 20a of the display panel 20 is expressed as go. Here, $g_r$ is expressed as the sum of go and the thickness (t) of cover 24. Here, g(x) is expressed as the sum of $g_0$ and d(x). For example, the apparent gap of the display element 25 located at the point represented by $x_0$ is represented by $g(x_0) = g_0 + d(x_0)$. Here, g(x) is shorter than $g_r$. The apparent gap of the display element 25 located at the point represented by $x_1$ is represented by $g(x_1) = g_0 + d(x_1)$. The apparent gap of the display element 25 located at the point represented by $x_2$ is represented by $g(x_2) = go + d(x_2)$. The apparent gap

of the display element 25 located at the point represented by $x_3$ is represented by $g(x_3) = g_0 + d(x_3)$.

Here, $g(x)$ can be represented as a continuous function with the X coordinate as an argument. The controller 50 is configured to be able to determine the optimum parallax image pitch so that the condition that the observation distance becomes the OVD is satisfied based on the value of $g(x)$ at points with different x-coordinates originating from the display reference position on the display panel 20.

The position facing the user when the barrier panel 30 is viewed from the user is also called a barrier reference position. The barrier reference position may be set based on the display reference position. It is assumed that the barrier reference position is set as a position facing the display reference position on the barrier panel 30. The controller 50 is configured to be able to determine the optimum barrier pitch so that the condition that the observation distance becomes the OVD is satisfied based on the value of $g(x)$ at points with different x-coordinates originating from the barrier reference position on the barrier panel 30.

The display reference position and the barrier reference position are also collectively referred to as a common reference position. The controller 50 may be configured to be able to determine the optimum parallax image pitch and the optimum barrier pitch based on the common reference position.

It is assumed that the distance between the display panel 20 and the barrier panel 30 is small enough for the observation distance. That is, it is assumed that $P \gg g(x)$ is established. In this case, according to the expressions (1) and (2), the parallax image pitch (k) and the barrier pitch (Bp) can be regarded as equal. Hereinafter, it is assumed that the parallax image pitch and the barrier pitch are equal.

In the case where the parallax image pitch and the barrier pitch are equal, the parallax image pitch and the barrier pitch are also collectively referred to as a common pitch. The controller 50 may be configured so that the parallax image pitch and the barrier pitch can be controlled as the common pitch. The common pitch which satisfies the condition that the observation distance becomes the OVD is also called an optimum common pitch. The display panel 20 and the barrier panel 30 are also collectively referred to as a parallax panel.

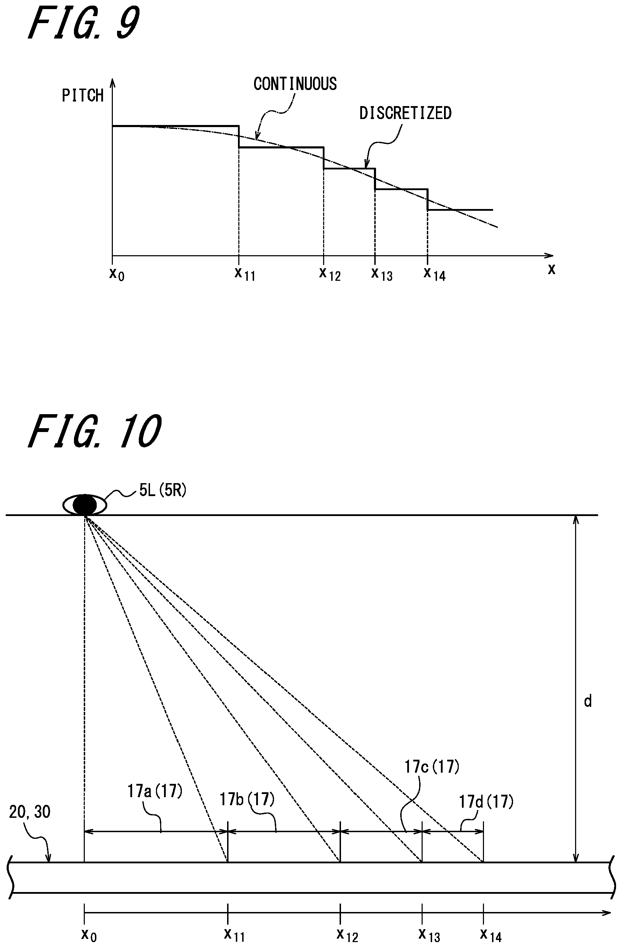

As illustrated in FIG. 9, the optimum common pitch in the case where the observation distance is the OVD in the parallax panel is expressed as the output of a continuous function with the x coordinate as the input. In a graph of FIG. 9, a horizontal axis represents the x-coordinate on the parallax panel. The common reference position on the parallax panel is represented as $x_0$. A vertical axis represents the optimum common pitch. The optimum common pitch can be expressed as a continuous function as illustrated by an alternate long and short dash line. The optimum common pitch becomes smaller as the distance from the common reference position increases.

In the case where the display panel 20 and the barrier panel 30 include pixels, the parallax image pitch and the barrier pitch are each determined in a unit of the pixel size. That is, the common pitch is set to the natural number multiple of the pixel size. Each pixel of the display panel 20 and the barrier panel 30 has a predetermined width in the X direction. The controller 50 is configured to be able to control the common pitch to a value which is the natural number multiple of the width of each pixel in the X direction. That is, the controller 50 is configured so that the common pitch is discretized to a value which is the natural number multiple of the width of the pixel in the X direction. In this case, the optimal common pitch is represented as the output of a stepped discontinuous function with the x coordinate as the input, as illustrated by a solid line in FIG. 9. The stepped discontinuous function outputs a predetermined value for each predetermined section including the input x coordinate. The boundaries of the predetermined sections are represented as $x_{11}$, $x_{12}$, $x_{13}$, and $x_{14}$. The controller 50 may be configured so that an inverse function of the continuous function can be acquired based on the continuous function which outputs the optimum common pitch with the X coordinate as an input. The controller 50 may be configured so that the boundary of the predetermined section can be set based on the x-coordinate as the output obtained by inputting a value that is the natural number multiple of the width of the pixel in the X direction into the inverse function, which can be the optimum common pitch.

As illustrated in FIG. 10, the controller 50 is configured so that a division region 17 can be set for each predetermined section corresponding to the discretized optimum common pitch on the parallax panel. The controller 50 may be configured so that a plurality of division regions 17 can be set based on the distance from the common reference position. Each division region 17 is associated with a discretized optimum common pitch. It is assumed that the common reference position is located at the point represented by $x_0$ on the X-axis. The controller 50 is configured to be able to control the display panel 20 and the barrier panel 30 so that the common pitch matches the optimum common pitch associated with each division region 17 in each division region 17 set in the parallax panel.

It is assumed that the plurality of division regions 17 include a first division region 17a, a second division region 17b, a third division region 17c, and a fourth division region 17d. The number of division regions 17 is not limited to four, and may be three or less, or five or more. The boundary of each division region 17 may coincide with the boundary of the predetermined section corresponding to the discretized optimum common pitch. The first division region 17a is set as a region from the common reference position to a point represented by $x_{11}$. The second division region 17b is set as a region from the point represented by $x_{11}$ to a point represented by $x_{12}$.

The third division region 17c is set as a region from the point represented by $x_{12}$ to a point represented by $x_{13}$. The fourth division region 17d is set as a region from the point represented by $x_{13}$ to a point represented by $x_{14}$.

The first division region 17a is adjacent to the second division region 17b with the point represented by $x_{11}$ as the boundary. The controller 50 may make the optimum common pitch in the second division region 17b one pixel shorter than the optimum common pitch in the first division region 17a adjacent to the side closer to the common reference position.

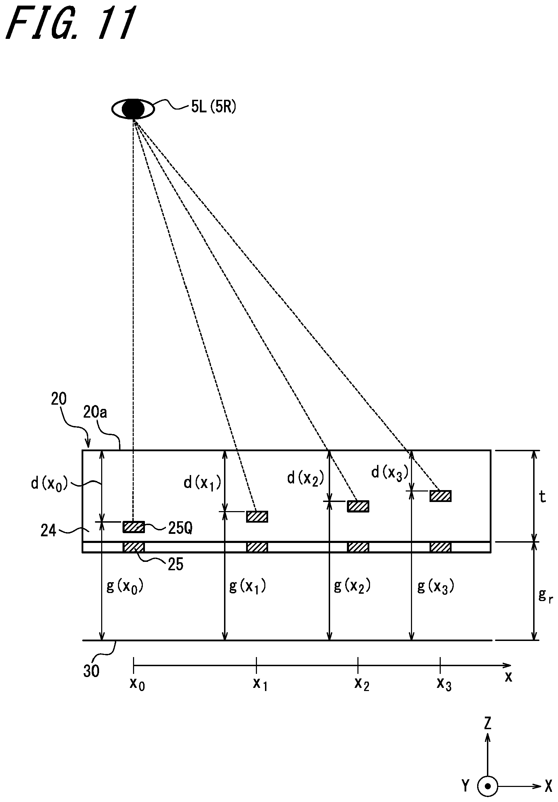

Up to this point, the configuration when the barrier panel 30 is located closer to the user than the display panel 20 when viewed from the eyes of the user is described. As illustrated in FIG. 11, the apparent gap may be represented as g(x) even when the display panel 20 is located closer to the user than the barrier panel 30 when viewed from the eyes of the user. In this case, the actual gap ($g_r$) is the distance from the barrier panel 30 to the display element 25. The apparent gap of the display element 25 located at the point represented by $x_0$ is represented by $g(x_0) = g_r + (t - d(x_0))$. Here, $x_0$ represents the common reference position. The apparent gap of the display element 25 located at the point represented by $x_1$ is represented by $g(x_1) = g_r + (t - d(x_1))$. The apparent gap of the display element 25 located at the point represented by $x_2$ is represented by $g(x_2) = g_r + (t - d(x_2))$. The apparent gap of the display element 25 located at the point represented by $x_3$ is represented by $g(x_3) = g_r + (t - d(x_3))$.

The apparent gap at each position of the configuration illustrated in FIG. 11 increases as the distance from the common reference position increases. The optimum common pitch at each position increases as the distance from the common reference position increases. Also, in this configuration, the controller 50 is configured so that the plurality of division regions 17 can be set in the parallax panel based on the common reference position. The controller 50 is configured to be able to control the display panel 20 and the barrier panel 30 for each division region 17 so that the common pitch becomes the optimum common pitch associated with each division region 17. The controller 50 may be configured so that the optimum common pitch in the second division region 17b is one pixel longer than the optimum common pitch in the first division region 17a adjacent to the side closer to the common reference position.

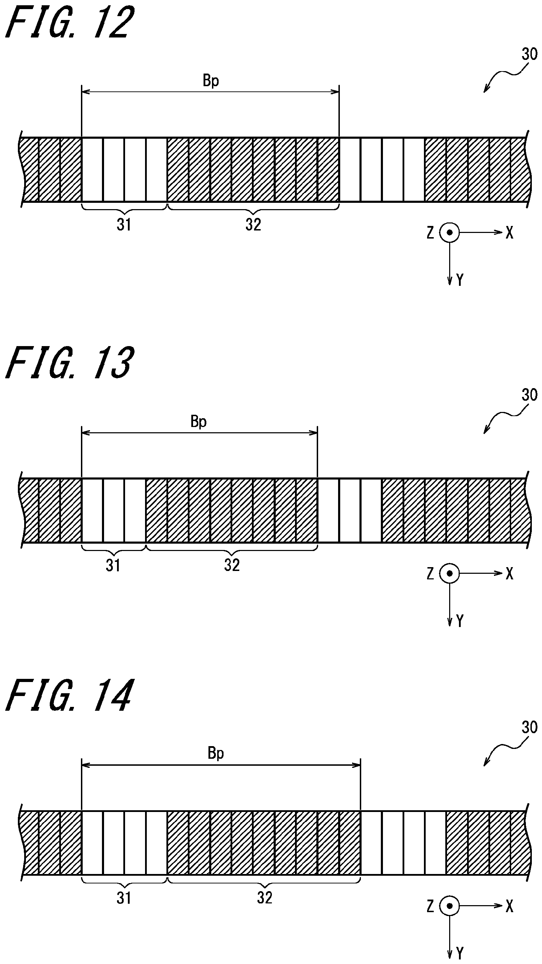

Regardless of the positional relationship between the display panel 20 and the barrier panel 30 as seen from the eyes of the user, it is assumed that the controller 50 is configured to be able to control the pixels in the first division region 17a of the barrier panel 30 as illustrated in FIG. 12. In FIG. 12, the barrier pitch (Bp) is set to the length of 12 pixels in the X-axis direction. Respective lengths of the light-transmitting region 31 and the dimming region 32 are set to four pixels and eight pixels.

In the case where the barrier panel 30 is located closer to the user than the display panel 20 as seen by the user, the controller 50 may be configured to be able to control the pixels in the second division region 17b of the barrier panel 30 as illustrated in FIG. 13. The second division region 17b is adjacent to the side farther from the common reference position than the first division region 17a. The controller 50 is configured so that the barrier pitch is shortened by one pixel in the second division region 17b. The controller 50 is configured so that the barrier pitch is shortened from twelve pixels to eleven pixels by shortening the length of the light-transmitting region 31 from four pixels to three pixels. Crosstalk is less likely to occur by configuring the controller 50 to shorten the length of the light-transmitting region 31 before shortening the length of the dimming region 32 in order to shorten the barrier pitch. In the case where the length of the light-transmitting region 31 is shortened in the second division region 17b, the controller 50 may be configured so that the length of the dimming region 32 is shortened in the third division region 17c, which is further away from the common reference position, or may be configured so that the length of the light-transmitting region 31 is reduced.

In the case where the display panel 20 is located closer to the user than the barrier panel 30 as seen by the user, the controller 50 may be configured to be able to control the pixels in the second division region 17b of the barrier panel 30 as illustrated in FIG. 14. The second division region 17b is adjacent to the side farther from the common reference position than the first division region 17a. The controller 50 is configured so that the barrier pitch is increased by one pixel in the second division region 17b. The controller 50 is configured so that the barrier pitch is increased from twelve pixels to thirteen pixels by increasing the length of the dimming region 32 from eight pixels to nine pixels. Crosstalk is less likely to occur because the controller 50 is configured so that the length of the dimming region 32 is increased before increasing the length of the light-transmitting region 31 in order to increase the barrier pitch. In the case where the length of the dimming region 32 is increased in the second division region 17b, the controller 50 may be configured so that the length of the light-transmitting region 31 is increased in the third division region 17c, which is further away from the common reference position, or may be configured so that the length of the dimming region 32 is increased.

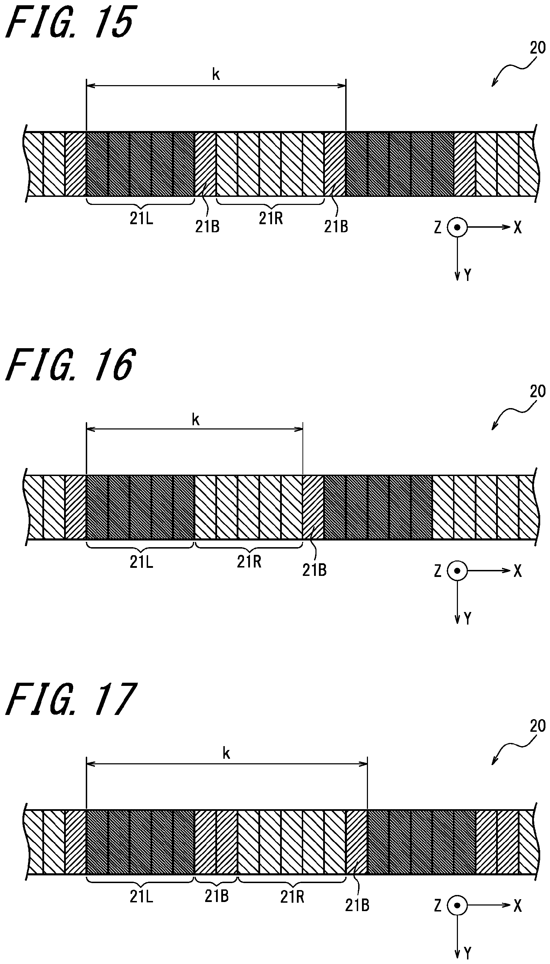

Regardless of the positional relationship between the display panel 20 and the barrier panel 30 as seen from the eyes of the user, it is assumed that the controller 50 is configured to be able to control the pixels in the first division region 17a of the display panel 20 as illustrated in FIG. 15. In FIG. 15, a parallax image pitch (k) is set to the length of twelve pixels in the X-axis direction. The length of each of the plurality of left-eye image display region 21L and the plurality of right-eye image display region 21R is set to five pixels. A black display region 21B is provided between each left-eye image display region 21L and each right-eye image display region 21R. The length of each black display region 21B is set to one pixel. A plurality of black display regions 21B do not display any of the plurality of left-eye images and the plurality of right-eye images. The plurality of black display regions 21B display a black image, or an image having a lower brightness than the plurality of left-eye images and the plurality of right-eye images. By doing so, even when a plurality of black display regions 21B are viewed by the left eye 5L or the right eye 5R of the user, crosstalk is less likely to occur.

In the case where the barrier panel 30 is closer to the user than the display panel 20 as seen by the user, the controller 50 may be configured to be able to control the pixels in the second division region 17b of the display panel 20 as illustrated in FIG. 16. The second division region 17b is adjacent to the side farther from the common reference position than the first division region 17a. The controller 50 is configured so that the parallax image pitch is shortened by one pixel in the second division region 17b. The controller 50 is configured so that the parallax image pitch is reduced from twelve pixels to eleven pixels by removing one of the two black display regions 21B. In order to shorten the parallax image pitch by the controller 50, by being configured to remove or shorten each black display region 21B before shortening the length of each left-eye image display region 21L or each right-eye image display region 21R, the image quality of the parallax image is less likely to deteriorate.

In the case where the plurality of black display regions 21B are configured to be removed or shortened in the second division region 17b, the controller 50 may be configured so that the length of the plurality of left-eye image display regions 21L or the plurality of right-eye image display regions 21R is reduced in the third division region 17c further away from the common reference position. In this case, crosstalk is less likely to occur as compared with the case where the plurality of black display regions 21B are continuously shortened.

The controller 50 is configured so that the lengths of the plurality of black display regions 21B reduced by one pixel in the second division region 17b is restored in the third division region 17c, and the controller 50 may be configured so that the plurality of left-eye image display regions 21L and the plurality of right-eye image display regions 21R are shortened by one pixel each. By doing so, the image quality of each of the plurality of left-eye images and the plurality of right-eye images can be maintained evenly.

The controller 50 may be configured so that the length of the plurality of left-eye image display regions 21L or the plurality of right-eye image display regions 21R is shortened in order to shorten the parallax image pitch. By doing so, crosstalk is less likely to occur as compared with the case where the plurality of black display regions 21B are shortened.

When the display panel 20 is located closer to the user than the barrier panel 30 as seen by the user, the controller 50 may be configured to be able to control the pixels in the second division region 17b of the display panel 20 as illustrated in FIG. 17. The second division region 17b is adjacent to the side farther from the common reference position than the first division region 17a. The controller 50 is configured so that the parallax image pitch is increased by one pixel in the second division region 17b. The controller 50 is configured so that the parallax image pitch is increased from twelve pixels to thirteen pixels by configuring one of the two black display regions 21B to be longer from one pixel to two pixels. The controller 50 is configured so that the plurality of black display regions 21B is lengthened before increasing the length of the plurality of left-eye image display regions 21L or the plurality of right-eye image display regions 21R to lengthen the parallax image pitch. As a result, crosstalk is less likely to occur.

In the case where the controller 50 is configured so that the plurality of black display regions 21B is lengthened in the second division region 17b, the controller 50 may control such that the length of the plurality of left-eye image display regions 21L or the plurality of right-eye image display regions 21R is increased in the third division region 17c further away from the common reference position. In this case, the image quality of the parallax image is less likely to deteriorate as compared with the case where the plurality of black display regions 21B are continuously lengthened.

In the third division region 17c, the controller 50 may be configured so that the length of the plurality of black display regions 21B increased by one pixel in the second division region 17b is restored, and may be configured so that the plurality of left-eye image display regions 21L and the plurality of right-eye image display regions 21R is lengthened by one pixel each. By doing so, the image quality of each of the plurality of left-eye images and the plurality of right-eye images can be maintained evenly.

The controller 50 may be configured so that the length of the plurality of left-eye image display regions 21L or the plurality of right-eye image display regions 21R is increased in order to increase the parallax image pitch. By doing so, the image quality of the parallax image is less likely to deteriorate as compared with the case where the plurality of black display regions 21B are lengthened.

The arrangement of pixels in the configuration illustrated in FIGS. 12 to 17 is an example. The arrangement of pixels in the display panel 20 and the barrier panel 30 is not limited to these examples and may be in various modes.

So far, the configuration in the case where the parallax image pitch and the barrier pitch are assumed to be equal has been described. The parallax image pitch and the barrier pitch may be different. In this case, according to the expressions (1) and (2), k > Bp is established in the case where the barrier panel 30 is located closer to the user than the display panel 20 when viewed from the user. In the case where the display panel 20 is located closer to the user than the barrier panel 30 as seen by the user, k < Bp is established. Regardless of the positional relationship between the display panel 20 and the barrier panel 30 as seen by the user, the controller 50 may be configured so that the optimum parallax image pitch and the optimum barrier pitch are discretized. The controller 50 may be configured so that a plurality of division regions 17 can be set in the display panel 20 and the barrier panel 30 based on the discretized optimum parallax image pitch and the optimum barrier pitch.

The controller 50 may be configured so that the division region 17 can be set in the display panel 20 based on the display reference position. In this case, the controller 50 is configured to be able to control the display panel 20 for each division region 17 based on the optimum parallax image pitch associated with the division region 17.

The controller 50 may be configured so that the plurality of division regions 17 can be set in the barrier panel 30 based on the barrier reference position. In this case, the controller 50 is configured to be able to control the barrier panel 30 for each division region 17 based on the optimum barrier pitch associated with the division region 17.

A device according to a comparative example is not configured to set the parallax image pitch based on the display reference position or set the barrier pitch based on the barrier reference position. In this case, the image quality of the parallax image may deteriorate due to the change in the apparent gap. In the image display device 10 according to the embodiment, by configuring at least one of the parallax image pitch and the barrier pitch to be controllable for each division region 17 set based on the reference position, it is possible to improve the image quality of the parallax image in the case where the apparent gap changes.

As illustrated in FIG. 18, the image display system 1 according to an embodiment includes the image display device 10 and the reflective member 60. The image display system 1 causes the image display device 10 to display an image and emits image light. The image light is reflected by the reflective member 60 along a path indicated by a broken line and reach the left eye 5L and the right eye 5R of the user. When the image light enters the eyes of the user, the user can view the image displayed on the image display device 10. By viewing the image light reflected by the reflective member 60, the user views the image displayed on the image display device 10 as a virtual image 10Q. The virtual image 10Q is located at the end of a route shown by an alternate long and short dash line extending a path shown by a broken line connecting the left eye 5L and the right eye 5R of the user and the reflective member 60 to an opposite side with respect to the reflective member 60. The image display system 1 may be a head-up display (HUD). The image display system 1 and the image display device 10 may provide the user with stereoscopic vision by being directly viewed by the user.

The image display system 1 according to the embodiment may be mounted on a moving body. In the case where the image display system 1 is mounted on a moving body, a user of the image display system 1 may be a driver or an operator of the moving body, or a passenger. In the case where the image display system 1 is mounted on a moving body, a part of the configuration of the image display system 1 may be shared with other devices and parts included in the moving body. For example, a windshield of the moving body may also be used as part of the configuration of the image display system 1. For example, the reflective member 60 illustrated in FIG. 1 may be replaced by the windshield of the moving body.

In the disclosure, examples of the "moving body" include vehicles, ships, and airplanes. In the disclosure, examples of "vehicles" include automobiles and industrial vehicles, but the disclosure is not limited thereto. The examples of "vehicles" may include railway vehicles, daily life vehicles, and fixed-wing aircrafts taxiing on the ground. Examples of automobiles include passenger cars, trucks, buses, motorcycles, and trolley buses, but the disclosure is not limited thereto. Examples of automobiles include other vehicles traveling on roads. Examples of the industrial vehicles include industrial vehicles for agriculture and construction. Examples of the industrial vehicles include forklifts and golf carts, but the disclosure is not limited thereto. Examples of the industrial vehicles for agriculture include tractors, tillers, transplanters, binders, combine harvesters, lawn mowers, but the disclosure is not limited thereto. Examples of the industrial vehicles for construction include bulldozers, scrapers, shovel cars, crane trucks, dump cars, and road rollers, but the disclosure is not limited thereto. Examples of vehicles include things traveling with manpower. The classification of the vehicles is not limited to the above-described vehicles. For example, the automobiles may include industrial vehicles which can travel on roads or may include the same vehicles classified into a plurality of classes. Examples of the ships in the disclosure include marine jets, boats, and tankers. Examples of the airplanes include fixed-wing aircrafts and rotary-wing aircrafts.

The configuration according to the disclosure is not limited to the embodiments described above and can be modified or changed in many ways. For example, the functions and the like included in each component and the like can be rearranged so as not to be logically inconsistent, and a plurality of components and the like can be combined into one or divided.

The diagram illustrating the configuration according to the disclosure is schematic. The dimensional ratios on the drawings do not always match the actual ones.

In the disclosure, the descriptions such as "first" and "second" are identifiers for distinguishing the configuration. The configurations distinguished by the descriptions such as "first" and "second" in the disclosure can exchange numbers in the relevant configurations. For example, the first display region and the second display region can exchange the identifiers "first" and "second". The exchange of identifiers takes place at the same time. Even after exchanging identifiers, the configuration is distinguished. The identifier may be removed. The configuration with the identifier removed is distinguished by reference numerals and letters. Based solely on the description of identifiers such as "first" and "second" in this disclosure, it shall not be used as a basis for interpreting the order of the configurations or for the existence of identifiers with smaller numbers.

In the disclosure, the X-axis, Y-axis, and Z-axis are provided for convenience of explanation and may be interchanged with each other. The configuration according to the disclosure is described using a Cartesian coordinate system composed of the X-axis, the Y-axis, and the Z-axis. The positional relationship of each configuration according to the disclosure is not limited to being orthogonal.

Descriptions of References

1: Image display system
5L: Left eye
5R: Right eye
10: Image display device
10Q: Virtual image
17 (17a to 17d): Division region (First to fourth division regions)
20: Display panel
20a: Surface
21L: Left-eye image display region
21R: Right-eye image display region
21B: Black display region
22L: Left-eye visible region
22R: Right-eye visible region
23L: Left-eye non-visible region
23R: Light-eye non-visible region
24: Cover
25, 250, 251: Display element
25Q, 250Q, 251Q: Virtual image
26: Display surface
30: Barrier panel
31: Light-transmitting region
32: Dimming region
40: Acquisition unit
50: Controller
60: Reflective member

**Claims**

1. An image display device, comprising:

a display panel;
a barrier panel; and
a controller,
the display panel comprising display-pixels arranged along a parallax direction which gives parallax to both eyes of a user,
the barrier panel being positioned so as to overlap the display panel and comprising barrier-pixels which are arranged along the parallax direction,
the controller being configured
so that first display regions and second display regions that are alternately arranged along the parallax direction, can be set in the display panel,
so that a first image projected on the first eye of the user can be displayed in each of the first display regions,
so that a second image projected on the second eye of the user can be displayed in each of the second display regions,
so that first transparent regions and second transparent regions that are alternately arranged along the parallax direction, can be set in the barrier panel, image light emitted from the display panel being transmitted through the first transparent regions at a first transmittance and the image light being transmitted through the second transparent regions at a second transmittance lower than the first transmittance,
so that eye-position information representing an eye-position of at least one of the first eye and the second eye can be acquired,
so that, based on the eye-position information, a reference position can be set in at least one of the display panel and the barrier panel,
so that, based on a distance from the reference position along the parallax direction, division regions can be set for at least one of the display panel and the barrier panel,
so that at least one of a parallax image pitch representing a pitch at which the first display regions and the second display regions are alternately arranged in the display panel and a barrier pitch representing a pitch at which the first transparent regions and the second transparent regions are alternately arranged in the barrier panel, can be set for each of the division regions.

2. The image display device according to claim 1, wherein

the display panel has a predetermined refractive index, and
the controller is configured so that, further based on the predetermined refractive index, the division regions can be set in the display panel and the barrier panel.

3. The image display device according to claim 1 or 2, wherein
the controller is configured so that, further based on whether the display panel is closer to or farther from both eyes of the user than the barrier panel, the division regions can be set in the display panel and the barrier panel.

4. The image display device according to any one of claims 1 to 3, wherein
in a case where the display panel is located on a side farther from the user than the barrier panel as seen from the user, the controller is configured so that, the more distant a division region is from the reference position, at least one of a number of display-pixels arranged along the parallax direction within the parallax image pitch and a number of barrier-pixels arranged along the parallax direction within the barrier pitch is reduced in the respective division regions.

5. The image display device according to any one of claims 1 to 3, wherein
in a case where the display panel is located on a side closer to the user than the barrier panel as seen from the user, the controller is configured so that, the more distant a division region is from the reference position, at least one of a number of display-pixels arranged along the parallax direction within the parallax image pitch and a number of barrier-pixels arranged along the parallax direction within the barrier pitch is increased in the respective division regions.

6. An image display system, comprising:

an image display device comprising a display panel, a barrier panel, and a controller; and
a reflective member,
the display panel comprising display-pixels arranged along a parallax direction which gives parallax to both eyes of a user,
the barrier panel being positioned so as to overlap the display panel and comprising barrier-pixels which are arranged along the parallax direction,
the controller being configured
so that first display regions and second display regions that are alternately arranged along the parallax direction, can be set in the display panel,
so that a first image projected on the first eye of the user can be displayed in each of the first display regions,
so that a second image projected on the second eye of the user can be displayed in each of the second display regions,
so that first transparent regions and second transparent regions that are alternately arranged along the parallax direction, can be set in the barrier panel, image light emitted from the display panel being transmitted through the first transparent regions at a first transmittance and the image light being transmitted through the second transparent regions at a second transmittance lower than the first transmittance,
so that eye-position information representing an eye-position of at least one of the first eye and the second eye can be acquired,
so that, based on the eye-position information, a reference position can be set in at least one of the display panel and the barrier panel,
so that, based on a distance from the reference position along the parallax direction, division regions can be set for at least one of the display panel and the barrier panel,
so that at least one of a parallax image pitch representing a pitch at which the first display regions and the second display regions are alternately arranged in the display panel and a barrier pitch representing a pitch at which the first transparent regions and the second transparent regions are alternately arranged in the barrier panel can be set for each of the division regions,
the reflective member reflecting image light related to the first image and the second image to cause the image light to reach the first eye and the second eye of the user.

7. The image display system according to claim 6, wherein
the display panel has a predetermined refractive index, and
the controller is configured so that, further based on the predetermined refractive index, the division regions can be set in the display panel and the barrier panel.

8. The image display system according to claim 6 or 7, wherein
the controller is configured so that, further based on whether the display panel is closer to or farther from both eyes of the user than the barrier panel, the division regions can be set in the display panel and the barrier panel.

9. The image display system according to any one of claims 6 to 8, wherein
in a case where the display panel is located on a side farther from the user than the barrier panel as seen from the user, the controller is configured so that, the more distant a division region is from the reference position, at least one of a number of display-pixels arranged along the parallax direction within the parallax image pitch and a number of barrier-pixels arranged along the parallax direction within the barrier pitch is reduced in the respective division regions.

10. The image display system according to any one of claims 6 to 8, wherein
in a case where the display panel is located on a side closer to the user than the barrier panel as seen from the user, the controller is configured so that, the more distant a division region is from the reference position, at least one of a number of display-pixels arranged along the parallax direction within the parallax image pitch and a number of barrier-pixels arranged along the parallax direction within the barrier pitch is increased in the respective division regions.

11. A moving body, comprising:

an image display system mounted on the moving body,
the image display system comprising

an image display device comprising a display panel, a barrier panel, and a controller, and
a reflective member,

the display panel comprising display-pixels arranged along a parallax direction which gives parallax to both eyes of a user,
the barrier panel being positioned so as to overlap the display panel and comprising barrier-pixels which are arranged along the parallax direction,
the controller being configured
so that first display regions and second display regions that are alternately arranged along the parallax direction, are set in the display panel,
so that a first image projected on the first eye of the user can be displayed in each of the first display regions,
so that a second image projected on the second eye of the user can be displayed in each of the second display regions,
so that first transparent regions and second transparent regions that are alternately arranged along the parallax direction, can be set in the barrier panel, image light emitted from the display panel being transmitted through the first transparent regions at a first transmittance and the image light being transmitted through the second transparent regions at a second transmittance lower than the first transmittance,
so that eye-position information representing an eye-position of at least one of the first eye and the second eye can be acquired,
so that, based on the eye-position information, a reference position can be set in at least one of the display panel and the barrier panel,
so that, based on a distance from the reference position along the parallax direction, division regions can be set for at least one of the display panel and the barrier panel,
so that at least one of a parallax image pitch representing a pitch at which the first display regions and the second display regions are alternately arranged in the display panel and a barrier pitch representing a pitch at which the first transparent regions and the second transparent regions are alternately arranged in the barrier panel, can be set for each of the division regions,
the reflective member reflecting image light related to the first image and the second image to cause the image light to reach the first eye and the second eye of the user.

12. The moving body according to claim 11, wherein

the display panel has a predetermined refractive index, and
the controller is configured so that, further based on the predetermined refractive index, the division regions can be set in the display panel and the barrier panel.

13. The moving body according to claim 11 or 12, wherein
the controller is configured so that, further based on whether the display panel is closer to or farther from both eyes of the user than the barrier panel, the division regions can be set in the display panel and the barrier panel.

14. The moving body according to any one of claims 11 to 13, wherein
in a case where the display panel is located on a side farther from the user than the barrier panel as seen from the user, the controller is configured so that, the more distant a division region is from the reference position, at least one of a number of display-pixels arranged along the parallax direction within the parallax image pitch and a number of barrier-pixels arranged along the parallax direction within the barrier pitch is reduced in the respective division regions.

15. The moving body according to any one of claims 11 to 13, wherein
in a case where the display panel is located on a side closer to the user than the barrier panel as seen from the user, the controller is configured so that, the more distant a division region is from the reference position, at least one of a number of display-pixels arranged along the parallax direction within the parallax image pitch and a number of barrier-pixels arranged along the parallax direction within the barrier pitch is increased in the respective division regions.

# FIG. 1

# FIG. 2

## FIG. 3

20

21L　　21R　　21L　　21R

Z ⊙ → X
↓
Y

## FIG. 4

30

31　　32　　31　　32　　31

Z ⊙ → X
↓
Y

# FIG. 5

## FIG. 6

## FIG. 7

DISTANCE FROM DISPLAY REFERENCE POSITION

# FIG. 8

## FIG. 9

## FIG. 10

# FIG. 11

## FIG. 12

Bp

30

31　32

Z ⊙ → X

↓ Y

## FIG. 13

Bp

30

31　32

Z ⊙ → X

↓ Y

## FIG. 14

Bp

30

31　32

Z ⊙ → X

↓ Y

# FIG. 15

20

k

21L    21B    21R    21B

Z ⊙ → X

↓ Y

# FIG. 16

20

k

21L    21R    21B

Z ⊙ → X

↓ Y

# FIG. 17

20

k

21L    21B    21R    21B

Z ⊙ → X

↓ Y

# FIG. 18

## INTERNATIONAL SEARCH REPORT

| International application No. |
| --- |
| PCT/JP2019/041753 |

### A. CLASSIFICATION OF SUBJECT MATTER
Int. Cl. G02B27/22(2006.01)i, G02F1/13(2006.01)i, G02F1/1335(2006.01)i, G03B35/24(2006.01)i, H04N13/31(2018.01)i, H04N13/312(2018.01)i, H04N13/346(2018.01)i, H04N13/363(2018.01)i, H04N13/373(2018.01)i

According to International Patent Classification (IPC) or to both national classification and IPC

### B. FIELDS SEARCHED
Minimum documentation searched (classification system followed by classification symbols)
Int. Cl. G02B27/22, G02F1/13, G02F1/1335, G03B35/24, H04N13/31, H04N13/312, H04N13/346, H04N13/363, H04N13/373

Documentation searched other than minimum documentation to the extent that such documents are included in the fields searched
Published examined utility model applications of Japan    1922-1996
Published unexamined utility model applications of Japan  1971-2019
Registered utility model specifications of Japan          1996-2019
Published registered utility model applications of Japan  1994-2019

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | JP 2018-120189 A (UNIVERSITY OSAKA CITY) 02 August 2018, paragraphs [0013]-[0034], fig. 1-3 & WO 2018/139611 A1 | 1-3, 6-8, 11-13 |
| A | | 4, 5, 9, 10, 14, 15 |
| Y | JP 2014-106532 A (SAMSUNG DISPLAY CO., LTD.) 09 June 2014, paragraphs [0115]-[0123], fig. 27-30 & US 2014/0146040 A1, paragraphs [0149]-[0157], fig. 15-17 & EP 2736256 A1 & KR 10-2014-0067575 A & CN 103841398 A | 1-3, 6-8, 11-13 |
| A | | 4, 5, 9, 10, 14, 15 |
| A | US 2018/0144671 A1 (BEIJING XIAOMI MOBILE SOFTWARE CO., LTD.) 24 May 2018, fig. 5 & EP 3324390 A2 & CN 106353916 A | 1-15 |

☐ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 02.12.2019 | 10.12.2019 |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

**EP 3 876 032 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018205979 A

- JP 2012141331 A